# FASCICULE DE BREVET EUROPEEN

(11) **EP 1 625 986 B1**
(45) Date de publication et mention de la délivrance du brevet: **23.09.2009**
(21) Numéro de dépôt: 05015278.4
(22) Date de dépôt: 14.07.2005
(51) Int. Cl.: B60T 11/26

(54) **Reservoir de liquide muni d'un systeme de detection de montage d'un bouchon**
Flüssigkeitsreservoir mit einem System zur Feststellung, ob ein Deckel montiert ist
Fluid reservoir with means to detect the installation of a cap

(30) Priorité: 09.08.2004 FR 0408781
(43) Date de publication de la demande: 15.02.2006
(73) Titulaire: ROBERT BOSCH GMBH, 70442 Stuttgart (DE)
(72) Inventeur: Fourcade, Jean, 77420 Champs sur Marne (FR)
(74) Mandataire: Hurwic, Aleksander Wiktor

(56) Documents cités:
- DE-A- 2 212 991
- DE-A- 3 711 369
- DE-A- 4 020 448

## Description

L'invention concerne un réservoir de liquide équipé d'un système de détection de montage d'un bouchon et plus précisément un système de détection permettant de détecter le montage correct d'un bouchon sur un réservoir. L'invention est applicable plus particulièrement à la détection du montage d'un bouchon de réservoir de liquide de frein pour circuit de freinage d'un véhicule automobile.

Le réservoir de liquide de frein d'un véhicule est fermé par un bouchon qui généralement se.visse sur le goulot de l'orifice de remplissage du réservoir. De plus en plus, dans les véhicules on cherche à se prémunir contre les erreurs humaines ou à les détecter. Il serait dangereux en effet qu'à la suite d'une manipulation, un opérateur omette de refermer le bouchon du réservoir de liquide de freins ou ne le referme pas correctement.

Certes, certains réservoirs de liquide de frein possèdent un dispositif de mesure de niveau du liquide de frein qui est intégré au bouchon du réservoir. Dans ce cas la jauge peut éventuellement donner l'alarme, mais cela peut ne pas être le cas si la jauge est dans une position telle que le signal qu'elle transmet ne permet d'indiquer l'anomalie.

Le document DE 4020448 décrit un réservoir de liquide de frein de véhicule comportant un orifice de remplissage avec les caractéristiques techniques du préambule de la revendication 1.

L'invention concerne donc un système de détection électrique du montage correct du bouchon d'un réservoir de liquide de frein.

L'invention concerne donc un réservoir de liquide de frein de véhicule comportant un orifice de remplissage obturable par un bouchon prévu pour être placé sur ou dans l'orifice de remplissage pour fermer le réservoir caractérisé en ce que ledit réservoir et ledit bouchon comportent des moyens coopérant ensemble permettant de détecter la mise en place correcte du bouchon.

L'invention concerne en plus un système de détection de montage d'un bouchon pour un réservoir ainsi conçu. Ce bouchon comporte un obturateur destiné à obstruer l'orifice de remplissage du réservoir et une collerette filetée destinée à être vissée sur le goulot de l'orifice de remplissage et à maintenir ledit obturateur sur l'orifice de remplissage. Selon un mode de réalisation préféré de l'invention, un dispositif de positionnement permet de positionner l'obturateur sur l'orifice de remplissage.

Au moins une piste conductrice de l'électricité est située sur le goulot.

L'obturateur possède au moins deux éléments conducteurs destinés à être en contact avec la piste conductrice lorsque l'obturateur est en place, et deux conducteurs électriques connectent lesdits éléments conducteurs à au moins un appareil de signalisation électrique.

Selon une variante de réalisation, l'obturateur comporte un dispositif de détection de niveau de liquide. Un desdits conducteurs électriques est alors connecté à un élément conducteur par l'intermédiaire dudit dispositif de détection de niveau de liquide.

Selon une autre variante de réalisation, le goulot du réservoir comporte au moins deux pistes conductrices. Avantageusement, l'obturateur comporte quatre éléments conducteurs. Une paire d'éléments conducteurs est destinée à être en contact avec une piste conductrice tandis que l'autre paire est destinée à être en contact avec l'autre piste conductrice. Un premier élément de chaque paire d'éléments conducteurs est connecté à un desdits conducteurs électriques et un deuxième élément de chaque paire d'éléments conducteurs est connecté à un dispositif de détection de niveau liquide situé sur l'obturateur.

Selon une forme de réalisation, le dispositif de détection de niveau de liquide est un contact scellé commandé par un électro-aimant destiné à .flotter sur la surface dudit liquide.

De préférence, on prévoit l'obturateur solidaire axialement de la collerette.

Préférentiellement, les surfaces de contacts dés pistes conductrices affleurent la surface intérieure du goulot.

Les différents aspects et caractéristiques de l'invention apparaîtront plus clairement dans la description qui va suivre et dans les figures annexées qui représentent :
- les figures 1a et 1b, un exemple de réalisation simplifié d'un goulot de réservoir auquel s'applique l'invention,
- les figures 2a et 2b, un exemple de réalisation simplifié d'un système de détection du montage correct d'un bouchon de réservoir,
- les figures 3a et 3b, un exemple de réalisation plus détaillé d'un système de détection correct du montage d'un bouchon de réservoir.
- les figures 4a et 4b, une variante de réalisation simplifiée du système des figures 3a et 3b.

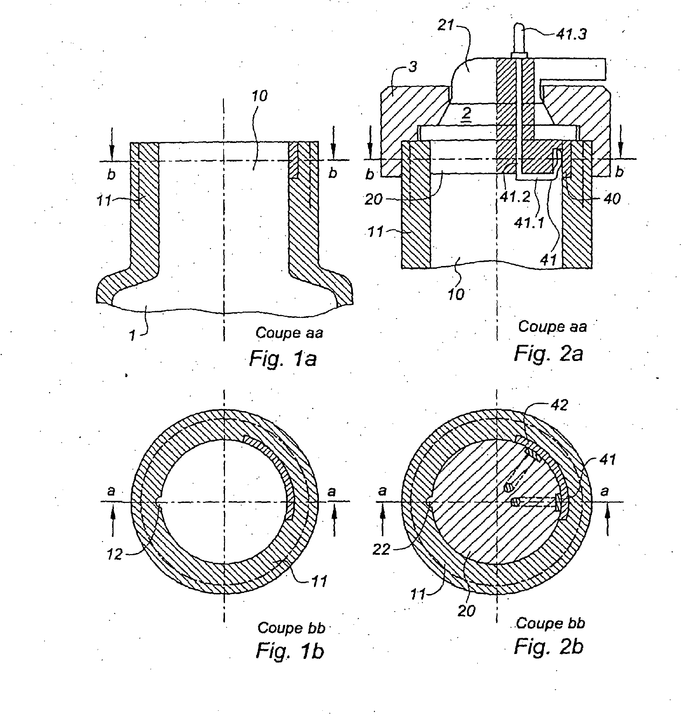

En se reportant aux figures 1a à 2b, on va donc décrire un exemple de réalisation simplifié d'un système de.détection du montage correct d'un bouchon de réservoir notamment d'un réservoir de liquide de freins d'un véhicule.

Le réservoir 1 comporte un orifice de remplissage 10 délimité par un goulot 11. Un obturateur 2 possède une partie 20 pouvant s'emboîter dans la partie supérieure du goulot 11 ainsi qu'une partie en forme d'épaulement 22 destinée à être plaquée contre la partie supérieure du goulot pour fermer le réservoir. Une collerette 3 est vissée sur le goulot et maintient en place l'obturateur 2.

Le réservoir 1 et l'obturateur 2 possèdent des formes complémentaires qui permettent de mettre en place l'obturateur dans une position déterminée et qui constitue un dispositif détrompeur. Par exemple, sur les figures 1a à 2b, ce dispositif détrompeur peut prendre la forme d'une encoche 12 réalisée à l'intérieur du goulot 11 et dans lequel doit être placée une nervure ou protubérance 22 prévue sur la périphérie de la partie 20 de l'obturateur 2 (comme on le verra en figures 2a et 2b).

Comme cela est visible sur les figures 1a et 1b, le goulot 11 possède sur sa surface intérieure, une piste 40 en matériau conducteur faisant arc de cercle dans le goulot et d'une longueur suffisante pour établir deux contacts comme on le verra ci-après.

Les figures 2a et 2b représente un tel réservoir de liquide de freins avec un bouchon selon l'invention monté sur l'orifice de remplissage du réservoir.

L'obturateur possède deux éléments conducteurs 41 et 42 situés sur la partie périphérique de la partie 20 de l'obturateur 2. Ces éléments conducteurs sont en contact avec la piste conductrice 40 du goulot lorsque le bouchon est convenablement monté sur le goulot du réservoir.

Chaque élément conducteur tel que 41 est connecté, par des conducteurs 41.1 et 41.2, à une borne de connexion telle que 41.3 située à la partie supérieure de l'obturateur 2. Les bornes telle que 41.3 permettent de connecter un dispositif de signalisation.

Lorsque l'obturateur n'est pas en place, le circuit électrique du dispositif de signalisation n'est pas fermé, ce qui permet de fournir une alarme. Tandis que lorsque l'obturateur est convenablement en place les éléments conducteurs 41 et 42 ainsi que la piste conductrice 40 ferment le circuit électrique du dispositif de signalisation.

La partie 20 de l'obturateur 2 possède donc au moins une protubérance 22 qui doit s'engager dans l'encoche 12 du goulot.

Par ailleurs, l'obturateur 2 possède une partie supérieure 21 qui déborde sur la partie supérieure de la collerette 3 de façon que la mise en place de l'obturateur dans le goulot impose de visser la collerette sur le goulot.

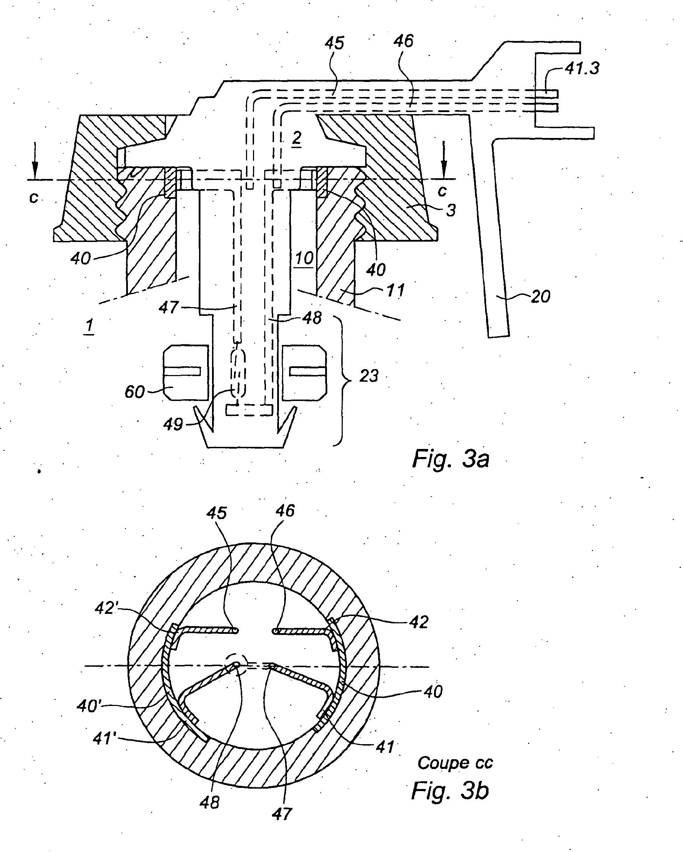

En se reportant aux figures 3a et 3b, on va maintenant décrire un exemple de réalisation plus détaillé du système selon l'invention.

L'obturateur 2 possède une extrémité 23 destinée à être plongée dans le liquide de freins du réservoir de liquide freins. Cette extrémité 23 est munie d'un contact scellé 49 commandé par un électro-aimant 60 qui peut coulisser sur l'extrémité 23. De plus, cet électro-aimant peut flotter à la surface du liquide de freins. Il commande l'ouverture du contact scellé 49 si le niveau de liquide de freins descend à un valeur critique (minimum).

Le goulot du réservoir est muni de deux pistes conductrices 40 et 40'. L'obturateur 2 est muni de deux paires d'éléments conducteurs 41/42 et 41'/42'. Les éléments conducteurs de chaque paire sont destinés à être en contact avec une piste conductrice.

Un élément de chaque paire d'éléments conducteurs est connecté à une borne du contact scellé. Ainsi l'élément 41 est connecté par le conducteur 48 à une borne du contact scellé 49, et l'élément 40' est connecté par le conducteur 47 à l'autre borne du contact scellé 49.

Par ailleurs, un élément de chaque paire d'éléments conducteurs est connecté à un conducteur de sortie 45, 46. Ainsi, l'élément conducteur 42 est connecté au conducteur 46 tandis que l'élément conducteur 42' est connecté au conducteur 45.

On voit donc que lorsque l'obturateur 2 est placé correctement dans le goulot du réservoir, les éléments conducteurs 41, 42, 41', 42' ainsi que les pistes conductrices établissent une continuité électrique entre les conducteurs 45 et 46 en passant par le contact scellé 49. Une discontinuité de ce circuit peut donc être détectée par des circuits de signalisation.

A noter que sur la figure 3a, le dispositif détrompeur permettant de monter correctement l'obturateur 2 dans le goulot 11 est réalisé sous la forme d'une tige 20 solidaire de l'obturateur venant se plaquer contre le réservoir et ne pouvant avoir qu'une seule place contre le réservoir.

Enfin, sur la figure 3a, on voit que l'obturateur est solidarisé axialement avec la collerette 3 par la partie supérieure de l'obturateur de telle sorte que, pour placer l'obturateur en position correcte dans le goulot du réservoir, il faut impérativement visser la collerette 3 sur le goulot.

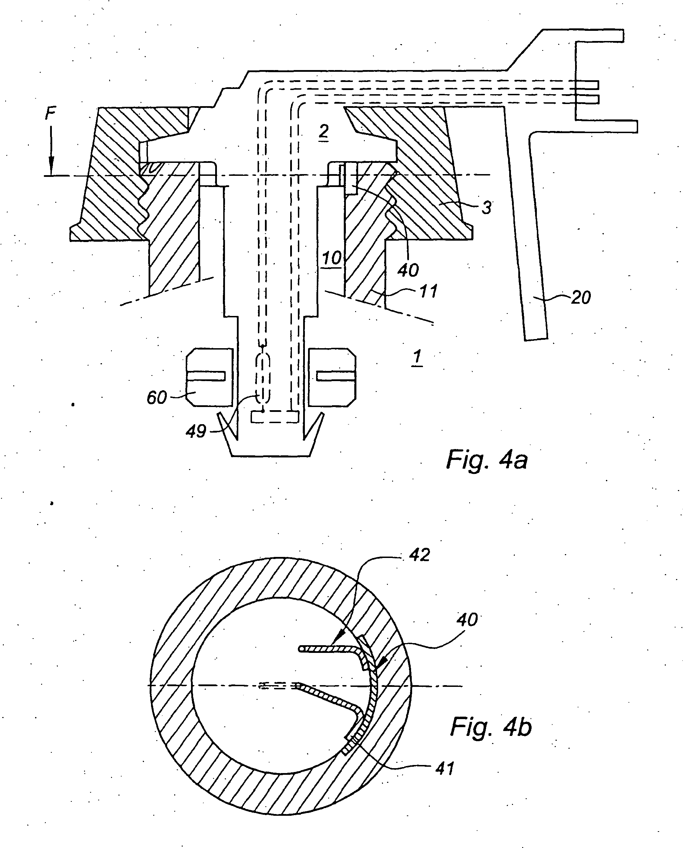

Les figures 4a et 4b représentent une variante de réalisation simplifiée du système de détection des figures 3a et 3b. Dans cette variante, le goulot du réservoir ne comporte qu'une seule piste conductrice 40 et l'obturateur ne comporte que deux éléments conducteurs 41 et 42 qui se trouve mis en contact avec la piste conductrice 40 lorsque l'obturateur est convenable monté sur le goulot du réservoir.

Le conducteur électrique 46 est connecté est connecté à l'élément conducteur 4. L'élément conducteur 41 est connecté à une borne du relais scellé 49 dont l'autre borne est connectée au conducteur électrique 45. Les éléments conducteurs, la piste conductrice et le relais scellé sont donc connectés en série aux conducteurs 45 et 46. On voit donc qu'un montage incorrect de l'obturateur pourra être détecté par un appareil de signalisation connecté- aux conducteurs 45 et 46.

Il est bien évident que le dispositif de détection de niveau de liquide pourrait prendre toute autre forme que celle d'un contact scellé commandé par un aimant. L'essentiel est que, dans les formes dé réalisation des figures 3a, 3b et 4a, 4b, ce dispositif ait une liaison électrique vers des dispositifs de signalisation du véhicule.

En ce qui concerne les pistes conductrices 40, 40', elles seront avantageusement réalisées dans le goulot du réservoir de telle façon que leur surface de contact affleure la surface intérieure du goulot.

## Revendications

1. Réservoir de liquide de frein de véhicule comportant un orifice de remplissage, obturable par un bouchon (2, 3) ledit réservoir et ledit bouchon comportant des moyens coopérant ensemble permettant de détecter la mise en place correcte du bouchon **caractérisé en ce que** ledit orifice de remplissage (10) comporte au moins une piste conductrice de l'électricité (40) destinée à établir une interconnexion électrique entre deux contacts électriques situés sur le bouchon (2,3) prévu pour être placé sur ou dans l'orifice de remplissage (10) pour fermer le réservoir, ladite interconnexion permettant d'établir la continuité électrique d'un système de détection de montage dudit bouchon sur le goulot du réservoir.

2. Système de détection de montage d'un bouchon de réservoir (1) de liquide de freins d'un véhicule pour réservoir selon la revendication 1, **caractérisé en ce que** ledit bouchon comprend:
- un obturateur (2) destiné à obstruer le goulot de l'orifice de remplissage (10) du réservoir (1) et une collerette filetée (3) destinée à être vissée sur le goulot de l'orifice de remplissage et à maintenir ledit obturateur (2) sur l'orifice de remplissage,
- un dispositif de positionnement (20, 12, 22) de l'obturateur (2) sur l'orifice de remplissage (10),
- au moins une piste (40) conductrice de l'électricité située sur le goulot (11)
- au moins deux éléments conducteurs (41, 42 et/ou 41', 42') situés sur l'obturateur et destinés à être en contact avec la piste conductrice (40) lorsque l'obturateur est en place,
- au moins deux conducteurs électriques (45, 46) connectant lesdits éléments conducteurs (41, 42, 41', 42') à au moins un appareil de signalisation électrique.

3. Système de détection de montage d'un bouchon de réservoir selon la revendication 2, **caractérisé en ce que** l'obturateur (2) est solidaire axialement de la collerette (3).

4. Système de détection de montage d'un bouchon de réservoir selon la revendication 3, **caractérisé en ce que** l'obturateur comporte un dispositif de détection de niveau de liquide (49), un desdits conducteurs électriques (45, 46) étant connecté à un élément conducteur par l'intermédiaire dudit dispositif de ; détection de niveau de liquide.

5. Système de détection de montage d'un bouchon de réservoir selon la revendication 4, **caractérisé en ce qu'**il comporte au moins deux pistes conductrices (40, 40') et quatre éléments conducteurs (41, 42, 41', 42'), une paire d'éléments conducteurs (41/42) étant destinée à être en contact avec une piste conductrice (40) tandis que l'autre paire (41'/42') est destinée à être en contact avec l'autre piste conductrice (40'), un premier élément de chaque paire d'éléments conducteurs étant connecté à un desdits conducteurs électriques (45, 46) et un deuxième élément de chaque paire d'éléments conducteurs étant connecté audit dispositif de détection de niveau liquide (49) situé sur l'obturateur.

6. Système de détection de montage d'un bouchon de réservoir selon l'une des revendications 4 ou 5, **caractérisé en ce que** le dispositif de détection de niveau de liquide est un contact scellé commandé par un électro-aimant destiné à flotter sur la surface dudit liquide.

7. Système de détection de montage d'un bouchon de réservoir selon l'une des revendications 2 à 6, **caractérisé en ce que** les surfaces de contacts (40, 40') des pistes conductrices affleurent la surface intérieure du goulot (11).

## Claims

1. Vehicle brake fluid reservoir comprising a filler hole that can be closed off by a cap (2, 3), the said reservoir and the said cap comprising means for interacting together making it possible to detect the correct installation of the cap, **characterized in that** the said filler hole (10) comprises at least one electrically conductive track (40) designed to establish an electric interconnection between two electric contacts situated on the cap (2, 3) designed to be placed on or in the filler hole (10) in order to close the reservoir, the said interconnection making it possible to establish the electric continuity of a system for detecting the installation of the said cap on the neck of the reservoir.

2. System for detecting the installation of a cap of a reservoir (1) of brake fluid for a vehicle for a reservoir according to Claim 1, **characterized in that** the said cap comprises:
- a stopper (2) designed to close off the neck of the filler hole (10) of the reservoir (1) and a threaded collar (3) designed to be screwed onto the neck of the filler hole and to keep the said stopper (2) on the filler hole,
- a device (20, 12, 22) for positioning the stopper (2) on the filler hole (10),
- at least one electrically conductive track (40) situated on the neck (11),
- at least two conductive elements (41, 42 and/or 41', 42') situated on the stopper and designed to be in contact with the conductive track (40) when the stopper is in place,
- at least two electric conductors (45, 46) connecting the said conductive elements (41, 42, 41', 42') to at least one electric signalling device.

3. System for detecting the installation of a reservoir cap according to Claim 2, **characterized in that** the stopper (2) is axially secured to the collar (3).

4. System for detecting the installation of a reservoir cap according to Claim 3, **characterized in that** the stopper comprises a fluid level detection device (49), one of the said electric conductors (45, 46) being connected to a conductive element via the said fluid level detection device.

5. System for detecting the installation of a reservoir cap according to Claim 4, **characterized in that** it comprises at least two conductive tracks (40, 40') and four conductive elements (41, 42, 41', 42'), one pair of conductive elements (41/42) being designed to be in contact with a conductive track (40) while the other pair (41'/42') is designed to be in contact with the other conductive track (40'), a first element of each pair of conductive elements being connected to one of the said electric conductors (45, 46) and a second element of each pair of conductive elements being connected to the said fluid level detection device (49) situated on the stopper.

6. System for detecting the installation of a reservoir cap according to one of Claims 4 or 5, **characterized in that** the fluid level detection device is a sealed contact controlled by an electromagnet designed to float on the surface of the said fluid.

7. System for detecting the installation of a reservoir cap according to one of Claims 2 to 6, **characterized in that** the contact surfaces (40, 40') of the conductive tracks are flush with the inner surface of the neck (11).

## Patentansprüche

1. Bremsflüssigkeitsbehälter eines Fahrzeugs, mit einer Einfüllöffnung, die von einem Stopfen (2, 3) geschlossen werden kann, wobei der Behälter und der Stopfen zusammenwirkende Mittel aufweisen, die es ermöglichen, das einwandfrei Anbringen des Stopfens zu erfassen, **dadurch gekennzeichnet, dass** die Einfüllöffnung (10) mindestens eine Stromleiterbahn (40) aufweist, die dazu bestimmt ist, eine elektrische Verbindung zwischen zwei elektrischen Kontakten zu erstellen, welche an dem Stopfen (2, 3) angeordnet sind, der dazu vorgesehen ist, auf oder in der Einfüllöffnung angebracht zu werden, um den Behälter zu schließen, wobei die Verbindung es ermöglicht, die elektrische Kontinuität eines Systems zum Erfassen der Anbringung des Stopfens auf dem Stutzen des Behälters zu erstellen.

2. System zum Erfassen der Anbringung eines Stopfens eines Bremsflüssigkeitsbehälters (1) eines Fahrzeugs für einen Behälter nach Anspruch 1, **dadurch gekennzeichnet, dass** der Stopfen folgendes aufweist:
- einen Verschluss (2), der dazu bestimmt ist, den Stutzen der Einfüllöffnung (10) des Behälters (1) zu schließen, und eine Gewindemuffe (3), die dazu bestimmt ist, auf den Stutzen der Einfüllöffnung aufgeschraubt zu werden und den Verschluss (2) auf der Einfüllöffnung zu halten,
- eine Vorrichtung zum Positionieren (20, 12, 22) des Verschlusses (2) auf der Einfüllöffnung (10),
- mindestens eine Stromleiterbahn (40), die am Stutzen (11) angeordnet ist,
- mindestens zwei Leitelemente (41, 42, und/oder 41', 42'), die am Verschluss angeordnet und dazu bestimmt sind, mit der Leiterbahn (40) in Kontakt zu stehen, wenn der Verschluss angebracht ist,
- mindestens zwei elektrische Leiter (45, 46), die die Leitelemente (41, 42, 41', 42') mit mindestens einem elektrischen Anzeigegerät verbinden.

3. System zum Erfassen der Anbringung eines Stopfens eines Bremsflüssigkeitsbehälters nach Anspruch 2, **dadurch gekennzeichnet, dass** der Verschluss (2) axial mit der Muffe (3) fest verbunden ist.

4. System zum Erfassen der Anbringung eines Stopfens eines Bremsflüssigkeitsbehälters nach Anspruch 3, **dadurch gekennzeichnet, dass** der Verschluss eine Vorrichtung zum Erfassen des Flüssigkeitspegels (49) aufweist, wobei einer der elektrischen Leiter (45, 46) mit einem Leitelement über die Vorrichtung zum Erfassen des Flüssigkeitspegels verbunden ist.

5. System zum Erfassen der Anbringung eines Stopfens eines Bremsflüssigkeitsbehälters nach Anspruch 4, **dadurch gekennzeichnet, dass** es mindestens zwei Leiterbahnen (40, 40') und vier Leitelemente (41, 42, 41', 42') aufweist, wobei ein Paar von Leitelementen (41/42) dazu bestimmt sind, mit einer Leiterbahn (40) in Kontakt zu stehen, während das andere Paar (41'/42') dazu bestimmt ist, mit der anderen Leiterbahn (40') in Kontakt zu stehen, wobei ein erstes Element jedes Paars von Leitelementen mit einem der elektrischen Leiter (45, 46) und ein zweites Element jedes Paars von Leitelementen mit der Vorrichtung zum Erfassen des Flüssigkeitspegels (49), die am Verschluss angeordnet ist, verbunden ist.

6. System zum Erfassen der Anbringung eines Stopfens eines Bremsflüssigkeitsbehälters nach einem der Ansprüche 4 oder 5, **dadurch gekennzeichnet, dass** die Vorrichtung zum Erfassen des Flüssigkeitspegels ein geschützter Kontakt ist, der durch einen Elektromagnet gesteuert ist, der dazu bestimmt, an der Oberfläche der Flüssigkeit zu schwimmen.

7. System zum Erfassen der Anbringung eines Stopfens eines Bremsflüssigkeitsbehälters nach einem der Ansprüche 2 bis 6, **dadurch gekennzeichnet, dass** die Kontaktflächen (40, 40') der Leiterbahnen mit der Innenfläche des Stutzens (11) bündig sind.
